**Europäisches Patentamt**

**European Patent Office**

**Office européen des brevets**

(11) Veröffentlichungsnummer: **0 486 825 A2**

(12) **EUROPÄISCHE PATENTANMELDUNG**

(21) Anmeldenummer: **91117943.0**

(22) Anmeldetag: **22.10.91**

(51) Int. Cl.5: **F03G 7/00**, H02N 11/00, H04R 23/00

(30) Priorität: **22.11.90 DE 4037135**

(43) Veröffentlichungstag der Anmeldung: **27.05.92 Patentblatt 92/22**

(84) Benannte Vertragsstaaten: **AT BE CH DE DK ES FR GB IT LI LU NL SE**

(71) Anmelder: **Schwibbe, Friedrich** **Schulstrasse 8** **W-3221 Wenzen(DE)**

(72) Erfinder: **Schwibbe, Friedrich** **Schulstrasse 8** **W-3221 Wenzen(DE)**

(74) Vertreter: **Patentanwälte Thömen & Körner** **Zeppelinstrasse 5** **W-3000 Hannover 1(DE)**

(54) **Elektrohydraulische Antriebseinrichtung.**

(57) Die Erfindung bezieht sich auf eine elektrohydraulische Antriebseinrichtung . Dieser umfaßt einen eine Elektro-Viskose-Flüssigkeit und einen verschiebbaren Kolben enthaltenden Antriebsraum, dem ein wanderndes elektrisches Feld aufprägbar ist.

Die Elektro-Viskose-Flüssigkeit verfestigt sich in dem Bereich, in dem das elektrische Feld wirksam ist, und schiebt den Kolben vor sich hin. Über den Kolben kann mechanische Arbeit genutzt werden.

Fig. 1

Die Erfindung betrifft eine elektrohydraulische Antriebseinrichtung nach dem Oberbegriff des Anspruchs 1.

Die Wirkungsweise bekannter elektrischer Antriebe beruht entweder auf der Kraftwirkung magnetischer Felder, oder dem piezoelektrischen Effekt. Antriebe auf der Basis magnetischer Felder enthalten Wicklungen aus Kupfer und Kerne aus Eisen, also Materialien mit einem hohen spezifischen Gewicht, was sich ungünstig auf das Leistungs-Gewichts-Verhältnis des Antriebs auswirkt. Daneben entstehen auch magnetische Streufelder, die bei manchen praktischen Anwendungen, etwa in Magnetbandgeräten oder Meßgeräten für Kleinsignale stören.

Piezoelektrische Antriebe erzeugen keine magnetischen Streufelder und werden, soweit technisch möglich, dort eingesetzt, wo magnetische Streufelder die Funktion eines Gerätes beeinträchtigen würden. Sie haben aber den Nachteil, daß sie nur einen geringen Bewegungshub zulassen und daher lediglich für die Verschiebung eines Objektes in kleinen Schrittlängen in Frage kommen, etwa zur Feinjustierung eines Abtasters oder zur Ansteuerung einer Lautsprechermembran.

Der Erfindung liegt die Aufgabe zugrunde, eine elektrohydraulische Antriebseinrichtung zu schaffen, der ein günstiges Leistungs-Gewichts-Verhältnis besitzt, große Verschiebewege zuläßt und selbst keine magnetischen Streufelder erzeugt.

Diese Aufgabe wird bei einer elektrohydraulischen Antriebseinrichtung nach dem Oberbegriff des Anspruchs 1 durch die im kennzeichnenden Teil angegebenen Merkmale gelöst.

Die Erfindung nutzt als Antriebskraft die Eigenschaft einer Elektro-Viskose-Flüssigkeit, abgekürzt EVF genannt, aus, unter dem Einfluß eines elektrischen Feldes ihre Viskosität zu ändern. Eine solche EVF besteht z. B. aus Suspensionen oder Dispersionen feinverteilter hydrophiler Feststoffe in hydrophoben elektrisch nicht leitenden Ölen, z. B. Alumosilikaten in Silikonöl. Im feldfreien Zustand ist die EVF dünnflüssig, während unter dem Einfluß eines hinreichend starken elektrischen Feldes die EVF zunehmend dickflüssig wird, da sich die Feststoffteilchen zu festen Strukturen zusammenlagern.

In dem Bereich der EVF, dem das elektrische Feld aufgeprägt ist, bildet sich ein Propfen zusammenhaftender Feststoffteilchen aus, der andere Körper aus diesem Bereich hinausdrängt. Da der elektroviskose Effekt schnell und reversibel ist, kann durch ein wanderndes elektrisches Feld auch ein wandernder Bereich dickflüssigen oder sogar festen Aggregatszustandes in der EVF erzeugt werden, der einen anderen Körper, im vorliegenden Fall den Kolben, vor sich hinschiebt.

Praktische Versuche haben ergeben, daß aus der elektrischen Leistung, die zum Aufbau des wandernden elektrischen Feldes benötigt wird, eine hohe mechanische Leistung resultiert. Die erfindungsgemäße Antriebseinrichtung besitzt also einen hohen Wirkungsgrad. Angesichts des geringen spezifischen Gewichts der EVF sowie dem ebenfalls aus leichten Materialien herstellbaren Antriebsraum und Kolben ergibt sich so ein günstiges Leistungs-Gewichts-Verhältnis.

Eine praktische Ausgestaltung der Erfindung sieht vor, daß an den Wänden des Antriebsraumes mehrere elektrisch gegeneinander isolierte Elektrodenpaare angeordnet sind, an die eine sich zeitlich und örtlich ändernde Spannung anlegbar ist.

Die elektrisch gegeneinander isolierten Elektrodenpaare ermöglichen es, selektiv an beliebigen, sich jeweils quer durch den Antriebsraum erstreckenden Bereichen ein elektrisches Feld zu erzeugen. Durch das Anlegen einer sich zeitlich und örtlich ändernden Spannung kann dieses Feld mit der gewünschten Geschwindigkeit in die gewünschte Richtung verlagert werden und so über den sich ausbildenden Pfropfen in der EVF der Weg des Kolbens exakt gesteuert werden.

Vorzugsweise sind die Elektrodenpaare mit einer Spannungswelle beaufschlagt, die jeweils an einem Elektrodenpaar oder gleichzeitig an mehreren benachbarten Elektrodenpaaren anliegt und sich von Elektrodenpaar zu Elektrodenpaar ausbreitet.

Auf diese Weise läßt sich in der EVF ständig ein Pfropfen einer ausreichenden Größe und Festigkeit erzeugen oder aufrechterhalten, wie er für die benötigte Vortriebskraft des Kolbens erforderlich ist.

Weiterhin hat es sich als günstig erwiesen, wenn die Spannung einen Maximalwert von ca 4000 bis 10000 Volt besitzt.

Das durch diese Spannung erzeugte elektrische Feld sorgt für eine schnelle Zustandsänderung der Viskosität beim Wechsel der EVF von der flüssigen zur festen Phase. Er ermöglicht aber auch eine schnelle Rückkehr zur flüssigen Phase bei Abklingen des Feldes. Die Größe der Spannung ist ferner so bemessen, daß Spannungsüberschläge sicher vermieden werden.

Bei der Ausgestaltung des Antriebsraumes bieten sich mehrere Möglichkeiten. Eine erste Variante sieht vor, daß der Antriebsraum als ringförmig umlaufender Antriebsraum ausgebildet ist und das aufgeprägte elektrische Feld ein unidirektional wanderndes Feld ist.

Die mit der erfindungsgemäßen Antriebseinrichtung erzielbaren Bewegungsmöglichkeiten lassen sich sehr flexibel gestalten und so den jeweiligen Anwendungsfällen anpassen, ohne daß besondere mechanische Getriebe zur Umwandlung der Bewegungsrichtung erforderlich sind. Bei dem ringförmig umlaufenden Antriebsraum kann der Kolben eine kontinuierliche Kreisbewegung vollführen, die sich als Drehbewegung abgreifen läßt. Dabei ergibt sich eine starre Kopplung zwischen dem Kolben und dem wandernden elektrischen Feld, wie er sonst nur mit Schrittmotoren zu erzielen ist. Auch eine Drehrichtungsumkehr und ein Abbremsen der Bewegung ist möglich.

Bei einer zweiten Varianten ist der Antriebsraum als längsbegrenzter Antriebsraum ausgebildet. Das aufgeprägte elektrische Feld ist ein hin und her wanderndes Feld.

Eine Antriebseinrichtung in dieser Ausgestaltung besitzt die Eigenschaften eines Linearantriebs. Hiermit lassen sich Positioniervorgänge eines Objektes sowohl in großen als auch in kleinen Bewegungsschritten durchführen. Die starre Kopplung zwischen dem Kolben und dem wandernden elektrischen Feld ist auch hier vorhanden.

Bei einer bevorzugte Ausgestaltung weist der Kolben auf seiner der Antriebsrichtung abgewandten Seite eine sich im Durchmesser verringernde Außenkontur auf.

Durch diese Außenkontur ergibt sich eine größere Berührungszone mit dem sich verfestigenden Bereich der EVF bei Aufbau des elektrischen Feldes. Demzufolge ist auch die verdrängende Kraft, mit der der Pfropfen den Kolben vor sich hinschiebt, größer. Da bei einem hin und her wandernden Kolben in der einen Bewegungsrichtung die eine Seite und in der anderen Bewegungsrichtung die andere Seite die der Bewegungsrichtung abgewandte Seite ist, werden bei dieser Ausführung zweckmäßig beide Seiten mit einer sich im Durchmesser verringernden Außenkontur versehen.

Gemäß einer Weiterbildung füllt der Kolben an seiner weitesten Außenkontur die lichte Innenweite des Antriebsraumes aus.

Auch diese Maßnahme trägt dazu bei, die im Antriebsraum verfügbare Verdrängungkraft des Pfropfens voll auf den Kolben zu übertragen. Wird diese Ausgestaltung auch bei einem längsbegrenzter Antriebsraum gewählt, kann der Flüssigkeitsausgleich durch eine die beiden Enden des Antriebsraumes verbindende Ausgleichsleitung stattfinden.

Um die mechanische Leistung abzunehmen, ist der Kolben mit einem Antriebsgestänge gekoppelt.

Wenn in der Umgebung der Antriebseinrichtung magnetische Streufelder nicht stören, kann z. B. eine statische Magnetkupplung verwendet werden, die jegliche Dichtungsprobleme vermeidet. Das Antriebsgestänge kann dann vollständig außerhalb des Antriebsraumes angeordnet sein. Sollen jedoch magnetische Streufelder vermieden werden, so kann das Antriebsgestänge auch direkt mit dem Kolben verbunden und an der Durchtrittsstelle mit der Wand des Antriebsraumes eine Dichtung vorgesehen werden. Bei einer Durchtrittsstelle in Form eines Längsschlitzes kann die Dichtung als mitlaufender Schieber ausgebildet sein.

Je nach Ausführungsvariante umfaßt das Antriebsgestänge eine speziell ausgerichtete Kolbenstange. Bei einem ringförmig umlaufenden Antriebsraum verläuft die Kolbenstange in Radialrichtung.

Die Kolbenstange vollführt so bereits eine Schwenk- oder Drehbewegung, die in ihrem Drehpunkt unmittelbar für einen Drehantrieb ausgenutzt und mit einer Antriebswelle gekoppelt werden kann.

Bei einem geradlinig gestreckten Antriebsraum verläuft die Kolbenstange in Längsrichtung.

Bei dieser Ausführung ist eine Dichtung in einfacher Weise als Schaftdichtung zu realisieren. Die Kolbenstange kann bei einem längsbeweglichen Objekt unmittelbar mit diesem verbunden werden. Eine Drehbewegung läßt sich erzeugen, wenn die Kolbenstange über ein Pleuel mit einer Kurbelwelle gekoppelt wird.

Weiterbildungen und vorteilhafte Ausgestaltungen der Erfindung ergeben sich aus den Ansprüchen, der weiteren Beschreibung und der Zeichnung.

Nachfolgend wird die Erfindung anhand der Zeichnung näher erläutert.

In der Zeichnung zeigen:

Fig. 1    einen Längsschnitt durch eine elektrohydraulische Antriebseinrichtung gemäß der Erfindung mit einem ringförmig umlaufenden Antriebsraum,

Fig. 2    einen Längsschnitt durch eine elektrohydraulische Antriebseinrichtung gemäß der Erfindung mit einem geradlinig gestreckten Antriebsraum.

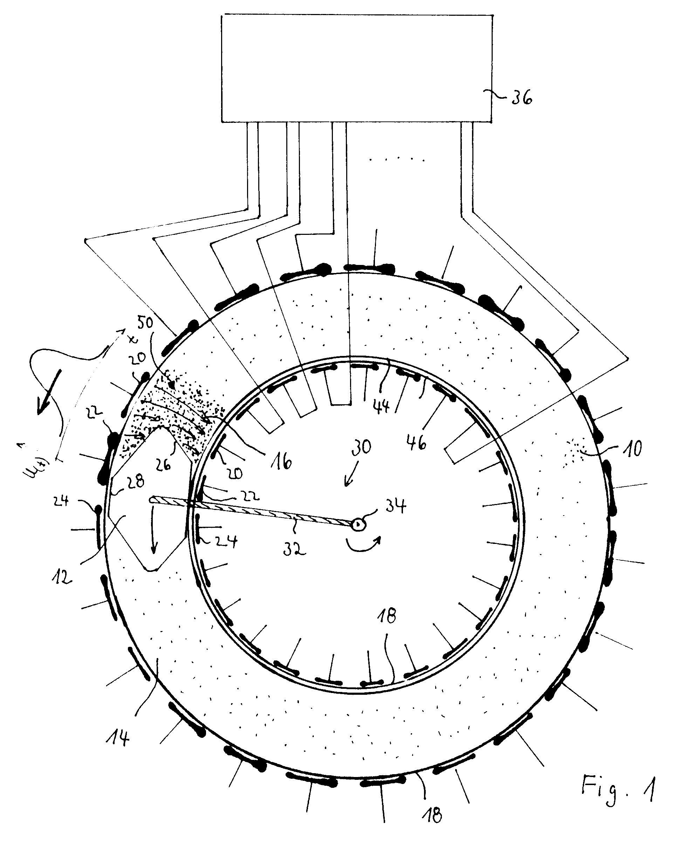

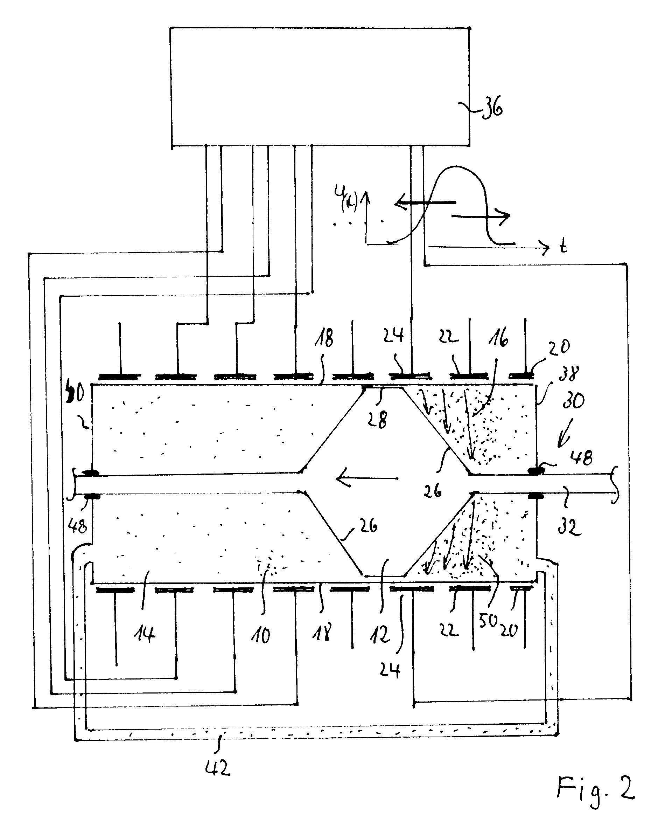

Die in den Figuren 1 und 2 gezeigten elektrohydraulische Antriebseinrichtung umfassen jeweils einen Antriebsraum 14, der mit einer Elektro-Viskose-Flüssigkeit 10, abgekürzt EVF genannt, gefüllt ist. Der Antriebsraum 14 ist durch Wände 18 aus elektrisch nichtleitendem Material begrenzt. An den Wänden 18 sind mehrere elektrisch gegeneinander isolierte Elektrodenpaare 20, 22, 24 angeordnet.

Die Elektrodenpaare 20, 22, 24 sind mit einer Steuerschaltung 36 verbunden, die sie an eine sich zeitlich und örtlich ändernde Spannung U(t) angelegt. Diese Spannung U(t), die einen Maximalwert von ca 4000 bis 10000 Volt besitzt, erzeugt innerhalb des Antriebsraumes 14 ein wanderndes elektrisches Feld 16.

Die EVF 10 besteht aus Suspensionen oder Dispersionen feinverteilter hydrophiler Feststoffe in hydrophoben elektrisch nicht leitenden Ölen, z. B. Alumosilikaten in Silikonöl. Im feldfreien Zustand ist die EVF 10 dünnflüssig, während unter dem Einfluß des zwischen den spannungsbeaufschlagten Elektrodenpaaren 20, 22, 24 befindlichen elektrischen Feldes 16 die EVF 10 zunehmend dickflüssig wird, da sich die reststoffteilchen zu festen Strukturen zusammenlagern.

Außer der Elektro-Viskose-Flüssigkeit 10 befindet sich ein verschiebbarer Kolben 12 im Antriebsraum 14. Dieser weist auf seiner der Antriebsrichtung abgewandten Seite eine sich im Durchmesser verringernde Außenkontur 26 auf. Der Kolben 12 füllt an seiner weitesten Außenkontur 28 die lichte Innenweite des Antriebsraumes 14 aus. Ferner ist der Kolben 12 mit einem Antriebsgestänge 30 gekoppelt.

Bei der Ausgestaltung gemäß Fig. 1 ist ein ringförmig umlaufender Antriebsraum 14 vorhanden. Durch die Steuerschaltung 36 werden die Elektrodenpaare 20, 22, 24 so angesteuert, daß das aufgeprägte elektrische Feld 16 ein unidirektional wanderndes Feld ist. Dabei kann die Ansteuerung mit einer Spannungswelle U(t) erfolgen, die jeweils an einem Elektrodenpaar 20; 22; 24 oder gleichzeitig an mehreren benachbarten Elektrodenpaaren 20, 22; 22, 24 anliegt. Diese Spannungswelle U(t) breitet sich von Elektrodenpaar 20; 22; 24 zu Elektrodenpaar aus, wie es in der Zeichnung durch den Amplitudenverlauf mit dem Richtungspfeil angedeutet ist.

Demgegenüber ist der Antriebsraum 14 bei der Ausführung in Fig. 2 ein längsbegrenzter Antriebsraum. Bei dem aufgeprägten elektrischen Feld 16 handelt es sich um ein zwischen den beiden Enden 38, 40 des Antriebsraumes 14 hin und her wanderndes Feld. Dies wird durch den Doppelpfeil des Amplitudenverlaufes angedeutet. Eine Ausgleichsleitung 42, die die beiden Enden 38, 40 des Antriebsraumes 14 verbindet, sorgt für einen Flüssigkeitsausgleich.

Bei der Ausführung gemäß Fig. 1 umfaßt das Antriebsgestänge 30 eine Kolbenstange 32, die in Radialrichtung verläuft und mit einer Antriebswelle 34 direkt gekoppelt ist. Ein mitlaufender Schieber 44 dichtet die als Längsschlitz 46 ausgebildete Durchtrittsstelle in der Wand 18 des Antriebsraumes 14 gegen die Umgebung ab, so daß keine EVF 10 austreten kann.

Bei der in Fig. 2 dargestellten Ausführung verläuft die Kolbenstange 32 in Längsrichtung des Antriebsraumes 14 und tritt an einer Seite durch eine Schaftdichtung 48 aus. Die Kolbenstange 32 ist außen mit einem nicht dargestellten längsbeweglichen Objekt unmittelbar verbunden.

Die Wirkungsweise der beiden dargestellten Ausführungsformen ist im Prinzip gleich. In dem Bereich der EVF 10, dem gerade das elektrische Feld 16 aufgeprägt ist, bildet sich ein Propfen 50 zusammenhaftender Feststoffteilchen aus. Befindet sich ein Teil des Kolbens 12 in diesem Bereich, so wird der Kolben 12 aus dem Propfen 50 hinausgedrängt. Verstärkt wird dieser Effekt durch die sich im Durchmesser verringernde Außenkontur 26 des Kolbens 12 auf seiner der Antriebsrichtung abgewandten Seite, also der mit dem Pfropfen 50 in Kontakt stehenden Seite. Die Außenkontur 26 ragt dann nämlich in das Zentrum des verfestigten Bereiches, in dem die Feldstärke und damit der Verfestigungsgrad am größten ist. Der Pfropfen 50 selbst wird dagegen durch das elektrische Feld 16 in Position gehalten und kann daher der Reaktionskraft standhalten, die der Kolben 12 bei Verschiebung auf den Pfropfen 50 ausübt.

Wenn nun das elektrische Feld 16 in die gleiche Richtung wandert, in die auch der Kolben 12 ausgewichen ist, drängt auch der sich neu bildende Propfen 50 den Kolben 12 wiederum hinaus. Durch ein in eine Richtung wanderndes Feld 16 gelingt es daher, den Kolben 12 zu einer stetigen Bewegung innerhalb des Antriebsraumes 14 zu veranlassen. Wenn das Feld 16 von der anderen Seite des Kolbens 12 her aufgebaut wird und in die entgegengesetzte Richtung wandert, wird auch der Kolben 12 in die umgekehrte Richtung verschoben.

Über das mit dem Kolben 12 verbundene Antriebsgestänge 30 kann der Kolben 12 mechanische Arbeit verrichten und auf ein angetriebenes Objekt übertragen. Dabei besteht solange, wie das elektrische Feld 16 den Pfropfen 50 in Position halten kann, eine starre Kopplung zwischen dem Kolben 12 und der aktuellen Position des elektrischen Feldes 16.

In einer weiteren zweckmäßigen Ausgestaltung der Erfindung besteht auch die Möglichkeit, auf einen wandernden Pfropfen 50 zu verzichten und das elektrische Feld in der Weise aufzubauen, daß in Fig. 2 der gesamte rechts neben dem Kolben 12 befindliche Raum verfestigt wird bzw. bleibt.

Bei sich nach links bewegendem Kolben 12 bildet sich also rechts ein stetig wachsender Pfropfen aus, und wenn der Kolben 12 das linke Ende erreicht hat, ist der rechte Teil des Antriebsraums über den gesamten Bereich verfestigt. Danach wird das elektrische Feld abgeschaltet, und der genannte rechte Bereich ist somit fast schlagartig wieder mit der flüssigen Elekro-Viskose-Flüssigkeit behaftet, und der gleiche Vorgang läuft nun analog bei einer folgenden Bewegung des Kolbens 12 nach rechts hin ab.

Abschließend sei noch angemerkt, daß die in der Zeichnung dargestellten Elekrodenpaare vorzugsweise plattenförmig ausgebildet sind.

## Patentansprüche

1. Elektrohydraulische Antriebseinrichtung, bei welcher an einen eine Elektro-Viskose-Flüssigkeit (10) enthaltenden Antriebsraum (14) mit einem darin von der Elektro-Viskose-Flüssigkeit (10) verschiebbaren Kolben (12) über mehrere an dessen Wänden (18) angeordnete, elektrisch gegeneinander isolierte Elektrodenpaare (20, 22, 24) durch eine Steuerschaltung (36) eine sich zeitlich und örtlich ändernde Spannung (U(t)) derart anlegbar ist, daß der Elektro-Viskose-Flüssigkeit (10) im Antriebsraum (14) ein wanderndes elektrisches Feld (16) aufgeprägt wird und der Kolben (12) aus einem Pfropfen der im elektrischen Feld (16) verfestigten Elektro-Viskose-Flüssigkeit (10) herausgedrängt und verschoben wird.

2. Elektrohydraulische Antriebseinrichtung nach Anspruch 1, dadurch gekennzeichnet, daß die Elektrodenpaare (20, 22, 24) mit einer Spannungswelle (U(t)) beaufschlagt sind, die jeweils an einem Elektrodenpaar (20) oder gleichzeitig an mehreren benachbarten Elektrodenpaaren (20, 22, 24) anliegt und sich von Elektrodenpaar (20) zu Elektrodenpaar (22) ausbreitet.

3. Elektrohydraulische Antriebseinrichtung nach Anspruch 1 oder 2, dadurch gekennzeichnet, daß die Spannung (U(t)) einen Maximalwert von ca 4000 bis 10000 Volt besitzt.

4. Elektrohydraulische Antriebseinrichtung nach einem oder mehreren der Ansprüche 1 bis 3, dadurch gekennzeichnet, daß der Antriebsraum (14) als ringförmig umlaufender Antriebsraum ausgebildet ist und das aufgeprägte elektrische Feld (16) ein unidirektional wanderndes Feld ist.

5. Elektrohydraulische Antriebseinrichtung nach einem oder mehreren der Ansprüche 1 bis 3, dadurch gekennzeichnet, daß der Antriebsraum (14) als längsbegrenzter Antriebsraum ausgebildet ist und das aufgeprägte elektrische Feld (16) ein hin und her wanderndes Feld ist.

6. Elektrohydraulische Antriebseinrichtung nach einem oder mehreren der Ansprüche 1 bis 5, dadurch gekennzeichnet, daß der Kolben (12) auf seiner der Antriebsrichtung abgewandten Seite eine sich im Durchmesser verringernde Außenkontur (26) aufweist.

7. Elektrohydraulische Antriebseinrichtung nach einem oder mehreren der Ansprüche 1 bis 6, dadurch gekennzeichnet, daß der Kolben (12) an seiner weitesten Außenkontur (28) die lichte Innenweite des Aptriebsraumes (14) ausfüllt.

8. Elektrohydraulische Autriebseinrichtung nach einem oder mehreren der Ansprüche 1 bis 7, dadurch gekennzeichnet, daß der Kolben (12) mit einem Antriebsgestänge (30) gekoppelt ist.

9. Elektrohydraulische Antriebseinrichtung nach Anspruch 8, dadurch gekennzeichnet, daß das Antriebsgestänge (30) bei einem ringförmig umlaufenden Antriebsraum (14) eine in Radialrichtung verlaufende Kolbenstange (32) umfaßt.

10. Elektrohydraulische Antriebseinrichtung nach Anspruch 8, dadurch gekennzeichnet, daß das Antriebsgestänge (30) bei einem geradlinig gestreckten Antriebsraum (14) eine in Längsrichtung verlaufende Kolbenstange (32) umfaßt.

11. Elektrohydraulische Antriebseinrichtung nach Anspruch 9 oder 10, dadurch gekennzeichnet, daß die Kolbenstange (32) mit einer Antriebswelle (34) gekoppelt ist.

Fig. 1

Fig. 2